# FASCICULE DE BREVET EUROPEEN

(11) **EP 2 009 330 B1**
(45) Date de publication et mention de la délivrance du brevet: **13.01.2010**
(21) Numéro de dépôt: 08305271.2
(22) Date de dépôt: 17.06.2008
(51) Int. Cl.: F16H 63/38, G05G 5/06

(54) **Perfectionnement pour dispositif de verrouillage par bille pour commande de boîte de vitesses**
Perfektionierung der Sperrkugelvorrichtung für Getriebesteuerung
Improvement of a ball locking device for controlling a gearbox

(30) Priorité: 26.06.2007 FR 0756016
(43) Date de publication de la demande: 31.12.2008
(73) Titulaire: Peugeot Citroën Automobiles Société Anonyme, 78140 Velizy Villacoublay (FR)
(72) Inventeur: Aleksander, Boris, 91400 Orsay (FR); Siegfried, Adrien, 92250 La Garenne Colombes (FR)

(56) Documents cités:
- DE-A1- 4 330 539
- DE-U1- 9 016 977
- JP-A- 6 161 584
- JP-A- 8 305 455
- US-A- 4 539 859

## Description

La présente invention concerne un dispositif de verrouillage d'une pièce mobile, notamment une commande de boîte de vitesses pour véhicule automobile.

Les boîtes de vitesses de véhicule automobile comportent des arbres parallèles supportant des couples de pignons, définissant chacun un rapport de transmission. Un des pignons de chaque couple est solidaire d'un premier arbre, l'autre pignon du couple monté libre en rotation sur l'autre arbre, peut être rendu solidaire de l'arbre qui le porte par le coulissement axial d'un manchon de synchronisation. Ce coulissement réalise une synchronisation des vitesses, puis un crabotage du pignon sur l'arbre.

Le manchon de synchronisation comporte une position neutre où aucun pignon n'est engagé, réalisant un point mort, et une ou deux positions axialement sur les côtés de la position neutre, pour l'engagement des pignons.

Chaque manchon de synchronisation est commandé par une fourchette portée par un axe de fourchette, comportant deux bras se terminant par des faces d'appui axiales qui s'ajustent dans une gorge circulaire du manchon, pour le pousser axialement tout en le laissant libre en rotation.

Un levier de vitesses commandé par le conducteur permet de sélectionner un des axes de fourchette par l'intermédiaire d'un système de sélection qui engage un doigt de commande dans une rainure de l'axe, puis réalise un passage vers le point mort ou vers une vitesse par un coulissement axial de la fourchette. Les différents mouvements de la commande peuvent être rotatifs ou linéaires.

Pour positionner et maintenir axialement les fourchettes dans une position neutre ou rapport engagé, on utilise généralement un dispositif de verrouillage de position à bille comportant une bille guidée axialement dans un logement lié au carter. Cette bille est poussée par un ressort vers des rainures en forme de « V » taillées sur l'axe de fourchette, de manière à ce qu'en exerçant une pression dans le fond de la rainure sous l'effet du ressort, la bille réalise un maintient axial de cet axe. Pour sortir de cette position, le coulissement de l'axe de fourchette impose une compression du ressort et un déplacement de la bille qui doit remonter sur les bords de la rainure.

Un verrouillage à bille de ce type est notamment décrit dans le document DE-C2-4330539 présentant un dispositif de verrouillage d'une pièce mobile comportant des rainures, par une bille maintenue dans un support coulissant dans un tube intérieur, qui est pressé par un ressort. Ce tube intérieur est maintenu dans un perçage d'une paroi d'un carter, par un deuxième tube extérieur qui enserre ce premier tube.

Par ailleurs l'extrémité du tube intérieur axialement opposée à la bille, comporte une cloison transversale comprenant des ouvertures, et servant d'appui pour le ressort de pression sur la bille. Ces ouvertures permettent notamment un passage d'air lors du coulissement axial du support de la bille, pour compenser une variation de volume dans le tube intérieur.

Un inconvénient principal de ce verrouillage à bille est qu'il ne réalise pas une étanchéité de la paroi du carter le supportant, de l'huile pouvant s'infiltrer entre le support de la bille et le tube interne, puis couler de l'autre côté de la paroi par les ouvertures de la cloison d'extrémité. De plus, ce dispositif de verrouillage avec son système de fixation sur la paroi comporte de nombreuses pièces.

Le document US 4 539 859 représente l'état de la technique le plus proche.

La présente invention a notamment pour but d'éviter ces inconvénients de la technique antérieure, et d'apporter à la réalisation d'un verrouillage à bille fixé sur une paroi d'un carter, une solution simple, efficace et économique.

Elle propose à cet effet un dispositif de verrouillage a bille situé dans un carter, en particulier pour boîte de vitesses de véhicule automobile, comportant un tube fixé sur une paroi du carter qu'il traverse, ce tube contenant une bille de verrouillage guidée axialement et pressée vers l'intérieur du carter par un ressort pour coopérer avec des rainures d'une pièce mobile, l'extrémité du tube tournée vers l'extérieur du carter étant fermée, caractérisé en ce qu'un perçage est réalisé sur le tube pour mettre en communication l'intérieur du tube avec le volume interne du carter.

Un avantage essentiel du dispositif de verrouillage selon l'invention est que dans le cas où de l'huile contenue dans le carter s'infiltre dans l'espace intérieur du tube par le jeu entre la bille et ce tube, cette huile peut ressortir librement par le perçage de communication quand la bille est repoussée, sans risquer de fuir vers l'extérieur sous l'effet de la pression.

Le dispositif de verrouillage selon l'invention peut en outre comporter une ou plusieurs des caractéristiques suivantes, qui peuvent être combinées entre elles.

Avantageusement, la bille est maintenue au moins partiellement dans le tube par un resserrement radial de l'extrémité du tube située dans le carter.

Le tube peut contenir un ressort hélicoïdal et une pièce de guidage de ce ressort, ajustée et coulissante dans le tube, qui est placée axialement entre la bille et le ressort.

Suivant une caractéristique de l'invention, le perçage de communication est placé axialement entre la face interne de la paroi du carter, et la pièce de guidage du ressort.

L'extrémité du tube tournée vers l'extérieur du carter, peut être fermée par une tôle de fermeture sertie au fond d'un lamage réalisé dans le tube.

Le tube peut comporter un filetage externe qui permet un vissage dans un trou taraudé de la paroi du carter de boîte de vitesses, et un dispositif d'étanchéité entre le tube et la paroi du carter.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue en coupe d'un dispositif de verrouillage selon l'invention, fixé dans une paroi ;
- la figure 2 est une vue en perspective du tube seul du dispositif de verrouillage présenté figure 1 ;
- la figure 3 est une vue en perspective d'un carter de boîte de vitesses recevant le dispositif de verrouillage selon l'invention ; et
- la figure 4 est une vue de détail de ce carter.

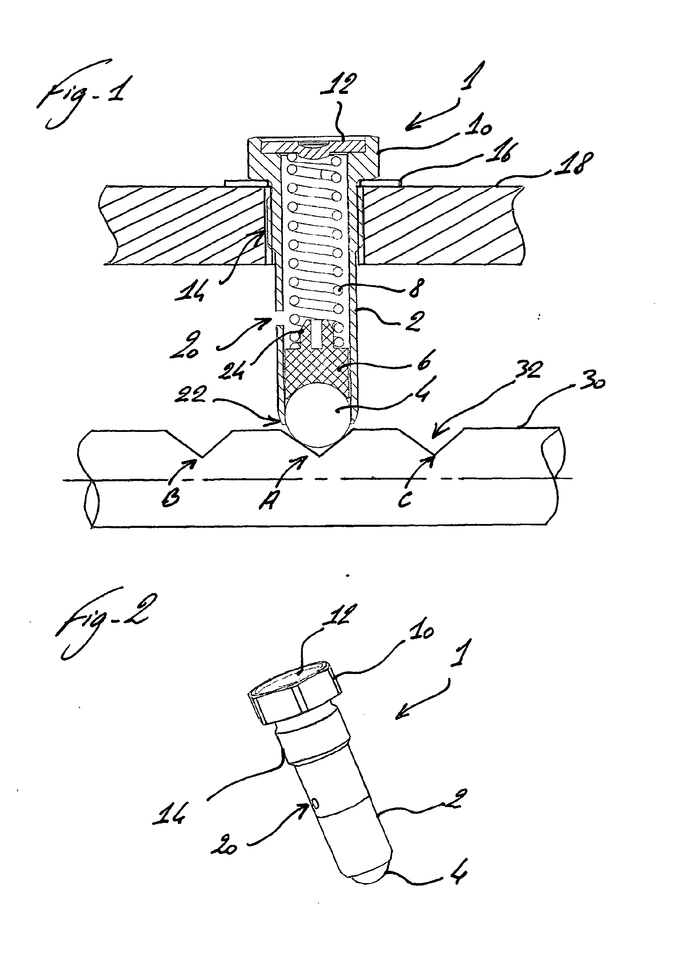

Les figures 1 et 2 représentent un dispositif de verrouillage 1 comportant un tube métallique 2, une bille 4 ajustée dans ce tube est maintenue à une extrémité, et peut coulisser axialement sous l'effet de la charge d'un ressort hélicoïdal 8 placé à l'intérieur du tube. Une première extrémité du ressort 8 prend appui sur la bille 4 par l'intermédiaire d'une pièce de guidage 6 cylindrique, ajustée elle aussi dans le tube 2, qui comporte d'un côté un creux sphérique recevant cette bille, et de l'autre côté un pion de centrage 24 qui s'ajuste dans le ressort.

La bille 4 est maintenue au moins partiellement dans le tube 2 par un resserrement radial 22 d'une extrémité du tube se trouvant à l'intérieur d'une paroi d'un carter 18 de boîte de vitesses, de manière à former un passage dont le diamètre est légèrement inférieur à celui de la bille pour qu'elle ne puisse pas se dégager complètement du tube. Ce moyen de maintien est simple et économique.

L'autre extrémité du tube 2 se trouve à l'extérieur du carter 18, elle comporte un épaulement 10 au contour externe hexagonal, comprenant un lamage axial recevant au fond une tôle de fermeture 12 sertie qui assure l'étanchéité du volume intérieur du tube. Cette tôle 12 sert aussi d'appui pour la deuxième extrémité du ressort 8, et comprend un bossage intérieur de centrage de ce ressort.

La partie externe du tube 2 proche de l'épaulement 10, comporte un filetage 14 qui permet un vissage dans un trou taraudé correspondant du carter 18. Le contour externe hexagonal de l'épaulement 10 permet un entraînement en rotation par une clé de montage. Une rondelle 16 est interposée entre l'épaulement 10 du tube 2 et le carter 18 pour assurer une étanchéité après serrage, ce carter contenant de l'huile de lubrification des pignons de la boîte de vitesses ainsi que du dispositif de verrouillage 1.

En variante, d'autres dispositifs d'étanchéité peuvent être prévus entre le tube 2 et le carter 18, par exemple une pâte d'étanchéité qui serait déposée sur le filetage extérieur 14 du tube.

De plus, le tube 2 comporte un perçage radial 20 se trouvant axialement dans une partie intermédiaire entre le côté interne de la paroi 18 et la pièce de guidage 6 du ressort 8, qui met en communication l'intérieur du tube avec le volume interne du carter 18 de boîte de vitesses rempli d'huile.

Une tige coulissante 30 supportant une fourchette de commande de manchon de synchronisation (non représenté) d'un rapport de vitesses, comporte trois rainures successives 32 présentant, suivant une coupe passant par l'axe, une forme en « V ».

La bille 4 du dispositif de verrouillage 1, est poussée par le ressort 8 dans le fond de la rainure centrale A pour maintenir la tige coulissante 30 dans une position axiale définie. Pour faire coulisser la tige 30, il faut exercer un effort axial suffisant pour comprimer le ressort 8 et soulever la bille 4 de manière à la faire remonter en dehors de la rainure 32.

Les rainures 32 de la tige coulissante 30 correspondent pour la rainure centrale A, à une position de point mort, et pour les deux rainures latérales B et C, à des positions de rapports engagés. De cette manière, les trois positions ainsi définies permettent de positionner axialement le manchon de synchronisation, et de maintenir cette position en évitant un coulissement accidentel de ce manchon par exemple avec les vibrations du moteur, ou lors d'un roulage avec un couple moteur sensiblement nul, le crabotage n'étant pas alors auto-verrouillé par la transmission d'un couple moteur.

La pente des rainures 32 et l'effort du ressort 8 seront calculés pour maintenir dans tous les cas la position verrouillée, tout en permettant un mouvement sans effort trop important sur le levier de vitesse.

Dans certains cas de fonctionnement, par exemple avec des températures élevées, l'huile de boîte de vitesses étant très fluide peut s'infiltrer par un jeu entre la bille 4 et la paroi interne du tube 2, et remplir le volume intérieur de ce tube.

Lors d'un démarrage ultérieur à froid et en l'absence de perçage 20 sur le tube 2, l'huile est beaucoup plus visqueuse alors que le volume interne du tube est pratiquement fermé. Pour réaliser un mouvement axial de la tige coulissante 30, il faut un effort important pour repousser la bille 4 et évacuer l'huile par les jeux, la bille agissant comme un piston, se trouvant bloquée par l'huile. L'actionnement du levier de vitesses par le conducteur peut devenir difficile, et la pression interne peut être telle qu'elle détériore le dispositif de verrouillage. Un effort important peut notamment dessertir la tôle de fermeture 12 en causant des fuites d'huile vers l'extérieur du carter de boîte de vitesses.

Dans le cas d'une boîte de vitesses robotisée comprenant des actionneurs réalisent les mouvements de sélection et de passage, un passage plus difficile des vitesses peut être gênant pour le système automatisé et causer des défaillances.

Le perçage radial 20 sur le tube 2 mettant en communication l'intérieur du tube avec le volume interne du carter 18, permet à l'huile de s'écouler librement en vidant ce volume, la bille peut reculer facilement sans être gênée par un remplissage de ce volume intérieur.

De plus, le perçage radial 20 se trouvant axialement au dessus de la pièce de guidage 6 du ressort 8, ne sera pas gêné par cette pièce de guidage qui pourrait venir en face et le fermer au moins partiellement.

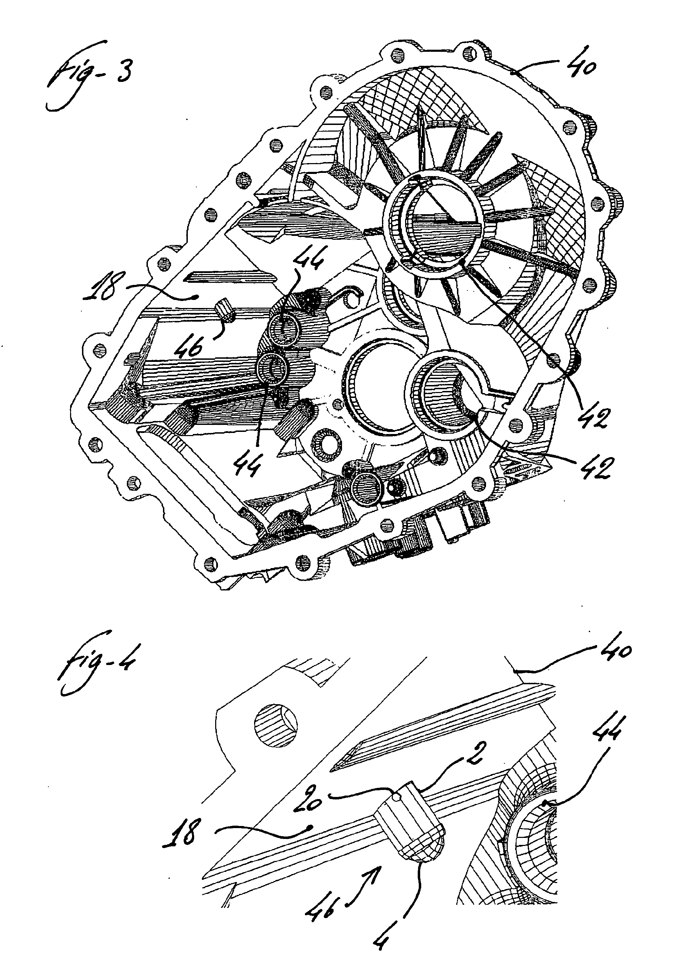

Les figures 3 et 4 présentent un carter 40 de boîte de vitesses, comportant des alésages 42 recevant des roulements de guidage des arbres parallèles équipés de pignons, et des alésages 44 pour le guidage de tiges coulissantes supportant des fourchettes de commande de manchons de synchronisation, montés sur les arbres parallèles.

Un dispositif de verrouillage 46 supporté par une paroi 18 du carter 40, dépasse vers l'intérieur. Il comporte un tube 2 comprenant une bille 4 coulissant dedans, qui vient se verrouiller dans des rainures d'une tige coulissante guidée par un des alésages de guidage 44. On notera le perçage 20 sur le tube 2, de mise en communication du volume interne du tube avec l'intérieur du carter 40, ce perçage débouchant près de la surface intérieur du carter.

Le dispositif de verrouillage 1 suivant l'invention est simple et économique, et peut se monter facilement sur un carter de boîte de vitesses.

## Revendications

1. Dispositif de verrouillage a bille (1) situé dans un carter, en particulier pour boîte de vitesses de véhicule automobile, comportant un tube (2) fixé sur une paroi (18) du carter (40) qu'il traverse, ce tube contenant une bille de verrouillage (4) guidée axialement et pressée vers l'intérieur du carter par un ressort (8) pour coopérer avec des rainures (32) d'une pièce mobile (30), l'extrémité du tube (2) tournée vers l'extérieur du carter (40) étant fermée, un perçage (20) étant réalisé sur le tube pour mettre en communication l'intérieur du tube avec le volume interne du carter (40), le tube (2) contenant un ressort hélicoïdal (8) et une pièce de guidage (6) de ce ressort, ajustée et coulissante dans le tube, qui est placée axialement entre la bille (4) et le ressort, **caractérisé en ce** le perçage de communication (20) est placé axialement entre la face interne de la paroi (18) du carter (40), et la pièce de guidage (6) du ressort (8).

2. Dispositif de verrouillage selon la revendication 1, **caractérisé en ce que** la bille (4) est maintenue au moins partiellement dans le tube (2) par un resserrement radial (22) de l'extrémité du tube située dans le carter (40).

3. Dispositif de verrouillage selon l'une des revendications précédentes, **caractérisé en ce que** l'extrémité du tube (2) tournée vers l'extérieur du carter (40), est fermée par une tôle de fermeture (12) sertie au fond d'un lamage réalisé dans le tube.

4. Dispositif de verrouillage selon l'une des revendications précédentes, **caractérisé en ce que** le tube (2) comporte un filetage externe (14) qui permet un vissage dans un trou taraudé de la paroi (18) du carter (40), et un dispositif d'étanchéité (16) entre le tube et la paroi du carter.

## Claims

1. Ball locking device (1) situated in a gear-case, in particular for a gearbox of a motor vehicle, comprising a tube (2) fixed on a wall (18) of the gear-case (40) which it passes through, this tube containing a locking ball (4) guided axially and pressed towards the interior of the gear-case by a spring (8) to cooperate with grooves (32) of a mobile piece (30), the end of the tube (2) turned towards the exterior of the gear-case (40) being closed, a drilled hole (20) being realized on the tube to cause the interior of the tube to communicate with the internal volume of the gear-case (40), the tube (2) containing a helicoidal spring (8) and a guiding piece (6) for this spring, fitted and sliding in the tube, which is placed axially between the ball (4) and the spring, **characterized in that** the drilled communication hole (20) is placed axially between the internal face of the wall (18) of the gear-case (40) and the guiding piece (6) of the spring (8).

2. Locking device according to Claim 1, **characterized in that** the ball (4) is held at least partially in the tube (2) by a radial constriction (22) of the end of the tube situated in the gear-case (40).

3. Locking device according to one of the preceding claims, **characterized in that** the end of the tube (2) turned towards the exterior of the gear-case (40) is closed by a closure plate (12) set at the bottom of a spot facing realized in the tube.

4. Locking device according to one of the preceding claims, **characterized in that** the tube (2) comprises an external thread (14) which permits a screwing in a tapped hole of the wall (18) of the gear-case (40), and a tightness device (16) between the tube and the wall of the gear-case.

## Patentansprüche

1. Verriegelungsvorrichtung mit Kugel (1), die sich in einem Gehäuse befindet, insbesondere für ein Schaltgetriebe eines Kraftfahrzeugs, die ein Rohr (2) aufweist, das auf einer Wand (18) des Gehäuses (40), die es durchquert, befestigt ist, wobei das Rohr eine Verriegelungskugel (4) aufweist, die axial geführt ist und von einer Feder (8) zum Inneren des Gehäuses gedrückt wird, um mit Rillen (32) eines beweglichen Teils (30) zusammenzuwirken, wobei das Ende des Rohrs (2), das zur Außenseite des Gehäuses (40) gerichtet ist, geschlossen ist, wobei eine Bohrung (20) auf dem Rohr hergestellt ist, um das Innere des Rohrs mit dem Innenvolumen des Gehäuses (40) kommunizieren zu lassen, wobei das Rohr (2) eine Schraubenfeder (8) und einen Führungsteil (6) dieser Feder, der in dem Rohr justiert ist und gleitet, aufweist, der axial zwischen der Kugel (4) und der Feder angeordnet ist, **dadurch gekennzeichnet, dass** die Kommunikationsbohrung (20) axial zwischen der Innenseite der Wand (18) des Gehäuses (40) und dem Führungsteil (6) der Feder (8) platziert ist.

2. Verriegelungsvorrichtung nach Anspruch 1, **dadurch gekennzeichnet, dass** die Kugel (4) zumindest teilweise in dem Rohr (2) von einer radialen Verengung (22) des Endes des Rohrs, die sich in dem Gehäuse (40) befindet, gehalten wird.

3. Verriegelungsvorrichtung nach einem der vorhergehenden Ansprüche, **dadurch gekennzeichnet, dass** das Ende des Rohrs (2), das aus dem Gehäuse (40) nach außen gerichtet ist, von einem Verschlussblech (12), das auf den Grund einer Senkung, die in dem Rohr hergestellt ist, gecrimpt ist, verschlossen ist.

4. Verriegelungsvorrichtung nach einem der vorhergehenden Ansprüche, **dadurch gekennzeichnet, dass** das Rohr (2) ein Außengewinde (14), das ein Schrauben in eine Gewindebohrung der Wand (18) des Gehäuses (40) erlaubt, und eine Dichtvorrichtung (16) zwischen dem Rohr und der Wand des Gehäuses aufweist.
